Europäisches Patentamt

European Patent Office

Office européen des brevets

(11) Veröffentlichungsnummer: **0 048 359**
**A1**

(12) # EUROPÄISCHE PATENTANMELDUNG

(21) Anmeldenummer: **81106879.0**

(51) Int. Cl.³: **G 01 P 5/12**

(22) Anmeldetag: **03.09.81**

(30) Priorität: **23.09.80 DE 3035769**

(43) Veröffentlichungstag der Anmeldung:
**31.03.82 Patentblatt 82/13**

(84) Benannte Vertragsstaaten:
**DE FR GB IT**

(71) Anmelder: **Degussa Aktiengesellschaft**
**Weissfrauenstrasse 9**
**D-6000 Frankfurt am Main 1(DE)**

(72) Erfinder: **Eiermann, Kurt, Dr. Dipl.-Phys.**
**Friedhofstrasse 26**
**D-6102 Pfungstadt(DE)**

(72) Erfinder: **Schäfer, Wolfgang, Dr.**
**Grosser Hasenpfad 137**
**D-6000 Frankfurt am Main(DE)**

(54) **Vorrichtung zur Messung der Strömungsgeschwindigkeit von Gasen und Flüssigkeiten.**

(57) Es wird eine Vorrichtung zur Messung der Strömungsgeschwindigkeit von Gasen und Flüssigkeiten beschrieben, insbesondere zur Messung der Ansaugluft von Verbrennungsmotoren mit einem oder mehreren temperaturabhängigen elektrischen Widerständen, die mit Hilfe einer Regelschaltung so beheizt werden, daß ein Maß für die Strömungsgeschwindigkeit erhalten wird. Die Widerstände haben die Form einer Platte, die parallel zur Strömungsrichtung in Kontakt mit dem strömenden Medium stehen. Zur besseren Konstanthaltung der Eichcharakteristik und Erzielung einer hohen Ansprechgeschwindigkeit werden eine oder mehrere Schmalseiten des plattenförmigen elektrischen Widerstands mit einer Schutzschicht bedeckt, vorzugsweise aus einem wärmeisolierenden Material.

EP 0 048 359 A1

Degussa Aktiengesellschaft
6000 Frankfurt/Main 1, Weißfrauenstrasse 9

Vorrichtung zur Messung der Strömungsgeschwindigkeit von Gasen und Flüssigkeiten.

Die Erfindung betrifft eine Vorrichtung zur Messung der Strömungsgeschwindigkeit von Gasen und
Flüssigkeiten, insbesondere der Ansaugluft von
Verbrennungsmotoren, mit einem oder mehreren temperaturabhängigen elektrischen Widerständen, die
in Wärmekontakt mit dem strömenden Medium stehen,
von denen einer oder mehrere mit Hilfe einer Regelschaltung derart beheizt werden, daß ein Maß
für die Strömungsgeschwindigkeit erhalten wird,
wobei der oder die beheizten Widerstände jeweils
die Form einer Platte haben, die parallel zur Strömungsrichtung ausgerichtet sind.

Im Interesse der Reinhaltung der Luft ist es erforderlich, die von Verbrennungsmotoren, insbesondere
von Kraftfahrzeugen, erzeugten Schadstoffe zu vermindern. Dieses Ziel wird u.a. durch eine Verbesserung des Verbrennungsablaufs erreicht. Dazu ist es
erforderlich, daß möglichst genaue Informationen
über die jeweils angesaugten Luftmengen zur Verfügung stehen, und zwar mit einer möglichst kleinen
Zeitverzögerung.

Hitzdrahtanemometer verschiedener Bauart sind bereits für die Messung der von Verbrennungsmotoren angesaugten Luftmenge vorgeschlagen worden. Der entscheidende Nachteil herkömmlicher Hitzdrahtanemometer ist, daß in der angesaugten Luft mitgeführte Schmutzpartikel sich auf dem beheizten Widerstand ablagern und dadurch die Eichcharakteristik der Wärmeabgabe verändern. Um dies zu verhindern ist vorgeschlagen worden, als beheizten Widerstand einen Metallfilmwiderstand auf einer Trägerplatte zu verwenden und diesen so anzuordnen, daß die Staubablagerung nicht auf der wärmeabführenden Fläche erfolgt.

In der DOS 2728060 wird vorgeschlagen, die der Strömung zugewandte Fläche des elektrischen Widerstandes möglichst klein gegenüber der wärmeabführenden Fläche zu machen. Es zeigt sich jedoch, daß bei einer in der Praxis realisierbaren Dimensionierung des Widerstandes die Verschmutzung dennoch zu einer unzulässig starken Veränderung der Kennlinie führt.

In der DOS 2827766 wird vorgeschlagen, auf der der Strömung zugewandten Seite des beheizten Widerstandes eine wärmeisolierende Schicht aufzubringen. Die in dieser Schrift beschriebene Ausführung sieht jedoch die Wärmeisolation auf einem relativ großen Anteil der gesamten Oberfläche des beheizten Widerstandes vor, insbesondere wird der Metallfilm des beheizten Widerstandes vollständig von der wärmeisolierenden Schicht bedeckt. Mit dieser Anordnung wird die Anforderung an die Ansprechgeschwindigkeit nicht hinreichend erfüllt.

Es war daher Aufgabe der vorliegenden Erfindung, eine Vorrichtung zur Messung der Strömungsgeschwindigkeit von Gasen und Flüssigkeiten, insbesondere der Ansaugluft von Verbrennungsmotoren, zu finden, mit einem oder mehreren temperaturabhängigen elektrischen Widerständen, die in Wärmekontakt zu dem strömenden Medium stehen, von denen einer oder mehrere mit Hilfe einer Regelschaltung derart beheizt werden, daß ein Maß für die Strömungsgeschwindigkeit erhalten wird, wobei der oder die beheizten Widerstände jeweils die Form einer Platte haben, die parallel zur Strömungsrichtung ausgerichtet sind. Diese Vorrichtung sollte eine stabile Eichcharakteristik und eine möglichst hohe Ansprechgeschwindigkeit besitzen.

Diese Aufgabe wurde erfindungsgemäß dadurch gelöst, daß eine oder mehrere Schmalseiten des oder der beheizten elektrischen Widerstände mit einer Schutzschicht bedeckt sind. Vorzugsweise ist nur die der Strömung zugewandte Schmalseite mit einer Schutzschicht bedeckt.

Ueberraschenderweise wird durch diese Maßnahme erreicht, daß die Eichcharakteristik stabil bleibt, bei einer sehr hohen Ansprechgeschwindigkeit.

Vorteilhafterweise verwendet man für die Schutzschicht ein wärmeisolierendes Material. Bewährt haben sich Kunststoffe und Lacke, insbesondere Kunststoffe auf Silikonbasis.

Als beheizte Widerstände verwendet man vor allem dünne Metallschichten, die auf einem Träger aufgebracht sind. Vorzugsweise wird die Metallschicht noch mit einer dünnen, gut wärmeleitenden Schutzschicht überzogen.

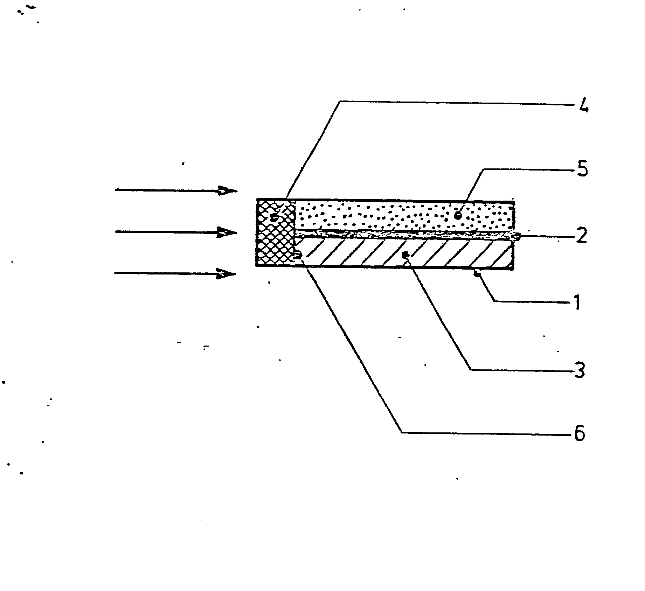

Die Abbildung zeigt schematisch eine beispielhafte Ausführungsform der erfindungsgemäßen Vorrichtung. Der beheizte Widerstand (1), bestehend aus einem Metallfilm (2) mit hohem Temperaturkoeffizienten auf einer elektrisch isolierenden Trägerplatte (3) , ist in an sich bekannter Weise Bestandteil einer elektronischen Regeleinrichtung, so daß der Heizstrom ein Maß für die von der Strömung abgeführte Wärmeleistung ist. Die der Strömung zugewandte Schmalseite (6) des beheizten Widerstandes (1) ist mit einer wärmeisolierenden Schicht (4) bedeckt, der Metallfilm (2) ist durch eine gut wärmeleitende Schicht (5) geschützt.

0048359

80 232 ET

Degussa Aktiengesellschaft
6000 Frankfurt/Main 1, Weißfrauenstrasse 9


Patentansprüche


1. Vorrichtung zur Messung der Strömungsgeschwindigkeit von Gasen und Flüssigkeiten, insbesondere der Ansaugluft von Verbrennungsmotoren, mit einem oder mehreren temperaturabhängigen elektrischen Widerständen, die in Wärmekontakt mit dem strömenden Medium stehen, von denen einer oder mehrere mit Hilfe einer Regelschaltung derart beheizt werden, daß ein Maß für die Strömungsgeschwindigkeit erhalten wird, wobei der oder die beheizten Widerstände jeweils die Form einer Platte haben, die parallel zur Strömungsrichtung ausgerichtet sind, dadurch gekennzeichnet, daß eine oder mehrere Schmalseiten (6) des oder der beheizten elektrischen Widerstände (1) mit einer Schutzschicht (4) bedeckt sind.

2. Vorrichtung nach Anspruch 1, dadurch gekennzeichnet, daß nur die der Strömung zugewandte Schmalseite (6) des oder der beheizten elektrischen Widerstände (1) mit einer Schutzschicht (4) bedeckt ist.

3. Vorrichtung nach Anspruch 1, dadurch gekennzeichnet, daß die Schutzschicht (4) wärmeisolierend wirkt.

4. Vorrichtung nach Anspruch 1 bis 3, dadurch gekennzeichnet, daß der oder die beheizten Widerstände (1) aus jeweils einer dünnen Metallschicht (2) bestehen, die auf einem elektrisch isolierenden Träger (3) aufgebracht sind.

5. Vorrichtung nach Anspruch 1 bis 4, dadurch gekennzeichnet, daß die Metallschicht (2) mit einer dünnen, gut wärmeleitenden Schutzschicht (5) überzogen ist.

Europäisches
Patentamt

**EUROPÄISCHER RECHERCHENBERICHT**

| | EINSCHLÄGIGE DOKUMENTE | | KLASSIFIKATION DER ANMELDUNG (Int Cl ³) |
|---|---|---|---|
| Kategorie | Kennzeichnung des Dokuments mit Angabe, soweit erforderlich, der maßgeblichen Teile | betrifft Anspruch | |
| D | DE - A - 2 827 766 (DEGUSSA) <br> * Seite 6, Zeilen 21-28; Figuren * <br> -- | 1-4 | G 01 P 5/12 |
| | CH - A - 296 378 (KOVOTECHNA...) <br> * Seite 2, Zeilen 2-7; Figur 1 * <br> -- | 1,3 | |
| D | DE - A - 2 728 060 (BOSCH) <br> * Seite 7, Zeile 21 - Seite 8, Zeile 5; Figur 4 * <br> -- | 1,4 | **RECHERCHIERTE SACHGEBIETE** (Int Cl ³) |
| A | FR - A - 2 409 493 (BOSCH) <br> * Seite 2, Zeile 37 - Seite 3, Ziele 26; Figur 1 * <br> ---- | 1 | G 01 P 5/10 <br> 5/12 <br> G 01 F 1/68 <br> 1/78 <br> F 02 D 5/00 <br> 5/02 |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 24-12-1981 | HANSEN |

EPA form 1503.1  06.78